# EUROPÄISCHE PATENTSCHRIFT

(11) **EP 3 726 952 B1**
(45) Veröffentlichungstag und Bekanntmachung des Hinweises auf die Patenterteilung: **26.07.2023**
(21) Anmeldenummer: 18833213.4
(22) Anmeldetag: 19.12.2018
(51) Int. Cl.: A01B 79/00, A01C 1/04, A01C 7/04, A01C 11/02, A01C 21/00

(54) **VORRICHTUNGEN UND VERFAHREN ZUM SCHUTZ VON NUTZPFLANZEN UND/ODER AUSSAATEN GEGEN UNERWÜNSCHTE BEIPFLANZEN**
DEVICES AND METHOD FOR PROTECTING CROP PLANTS AND/OR SOWN SEEDS AGAINST UNWANTED PLANTS
DISPOSITIFS ET PROCÉDÉ DE PROTECTION DE PLANTES UTILES ET/OU DE SEMIS CONTRE DES PLANTES SECONDAIRES INDÉSIRABLES

(30) Priorität: 22.12.2017 DE 102017131112; 22.12.2017 US 201762610122 P; 22.12.2017 DE 202017107894 U
(43) Veröffentlichungstag der Anmeldung: 28.10.2020
(73) Patentinhaber: Ehlers, Robert, 61476 Kronberg (DE); Büchel, Patrick, 53229 Bonn (DE)
(72) Erfinder: Ehlers, Robert, 61476 Kronberg (DE); Büchel, Patrick, 53229 Bonn (DE)
(74) Vertreter: 2K Patentanwälte Blasberg Kewitz & Reichel
(86) Internationale Anmeldenummer: PCT/EP2018/085996
(87) Internationale Veröffentlichungsnummer: WO 2019/122020

(56) Entgegenhaltungen:
- WO-A1-00/77344
- WO-A1-01/05213
- WO-A1-2009/067754
- DE-A1- 2 122 318
- US-B1- 9 313 944
- US-B1- 9 532 508

## Beschreibung

Die Erfindung betrifft eine Vorrichtung zum Schutz von Nutzpflanzen und/oder Aussaaten gegen unerwünschte Beipflanzen gemäß dem Oberbegriff des Anspruchs 1 sowie damit ausführbare Verfahren, einen Apparat und eine Maschine gemäß dem Oberbegriff des jeweils nebengeordneten Anspruchs. WO 2009/067754 A1 offenbart eine Vorrichtung zum Schutz von Nutzplflanzen.

Im Bereich der Landwirtschaft ist es ein grundlegendes Problem die angepflanzten Nutzpflanzen und/oder Aussaaten vor dem unerwünschten Wuchs von Beipflanzen, landläufig auch Unkraut genannt, zu bewahren. Der Einsatz von chemischen Beipflanzen-Bekämpfungsmitteln bzw. Herbiziden ist zwar weit verbreitet, bringt aber umweltschädliche Einflüsse mit sich. Daher steigt weltweit das Interesse in der Landwirtschaft die Menge an eingesetzten Herbiziden zu verringern.

Auch wenn eine rein mechanische Beipflanzenbekämpfung ohne Einsatz von Herbiziden auskommt, so sind die bekannten manuellen Verfahren sehr arbeitsaufwendig. Es sind diesbezüglich Verfahren und Vorrichtungen bekannt, die eine maschinelle automatische Beipflanzenbekämpfung ermöglichen, so etwa aus der US 5 442 552 A, welche eine Maschine als roboterartigen Kultivierer offenbart. Die dort offenbarte Maschine benötigt jedoch ein aufwendiges digitales Videoaufnahme und -auswertungssystem, welches die Nutzpflanzen von den zu entfernenden Beipflanzen unterscheiden kann. Selbst wenn die Videoauswertung sehr genau arbeiten sollte, so kann nicht sichergestellt werden, dass versehentlich auch Nutzpflanzen entfernt werden. Gegebenenfalls muss der Bediener der Maschine korrigierend eingreifen (manueller Eingriff).

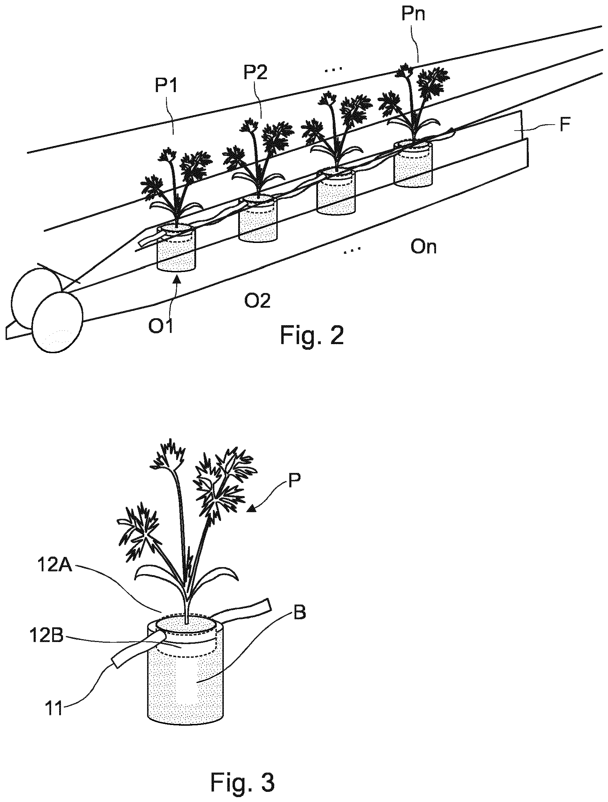

Die DE 42 34 432 A1 offenbart eine Vorrichtung sowie ein Verfahren zum Regeln der Hackwerkzeuge einer landwirtschaftlichen Hackmaschine während des Hackens von insbesondere Unkraut. Dazu weist die Vorrichtung ein bandförmiges Gebilde ("Vorratsstreifen 11") auf, der aus verrottbarem Material besteht und an dem eine Vielzahl von ringförmigen, detektierbaren Elementen ("detektierbare Körper" bzw. "Drahtkörper 4") beabstandet zueinander angebracht ist, wobei die einzelnen Elemente ("Drahtkörper 4") aus dem bandförmigen Gebilde ("Vorratsstreifen 11") ausgestanzt werden und dann in den Erdboden einer landwirtschaftlichen Fläche so eingebracht werden, dass die Elemente sich beabstandet zu einander zwischen zwei Pflanzreihen (s. Reihen mit "Pflanzen 2" in Fig. 2 sowie Text, Sp. 4, Zeilen 9-32) beispielsweise in der Fahrspur ("5" in Fig. 2) einer Sämaschine oder Pflanzmaschine befinden. Die Elemente sind vorzugsweise als detektierbare Drahtkörper in Form von Metallringen ausgebildet und werden beim Hackvorgang von einer Hackmaschine sensorisch abgetastet, um sicherzustellen, dass die Pflanzen nicht beschädigt werden. Die Hackmaschine folgt der durch die detektierbaren Körper festgelegten Fahrspur (s. Fig. 2) und wird auf den Pflanzabstand (Abstand "B" zwischen den Pflanzen) mittels Probehacken eingestellt (s. Text, Sp. 4, Zeilen 51 ff.). Der Abstand zwischen den detektierbaren Körpern (Abstand "C" in Fig. 2) ist deutlich größer als der Pflanzabstand (Abstand "B"). Dadurch werden deutlich weniger detektierbare Körper als Pflanzen pro Reiche in das Erdreich eingebracht. Auch wird nicht zu jeder Pflanzreihe eine Linie an detektierbaren Körpern ausgebracht. Die spart zwar Aufwand reduziert, aber die Genauigkeit der Detektion; insbesondere können die einzelnen Pflanzorte nicht detektiert werden, was wiederum eine effektive Beipflanzenbekämpfung erschwert. Des Weiteren verbleiben die einzeln ausgebrachten detektierbaren Drahtkörper im Erdreich und es verrottet lediglich das Konfektionierungsmaterial (Papierlagen "6 und 7"), in welchem die Drahtkörper eingebettet waren (s. Text, Sp. 3, Zeilen 40-61).

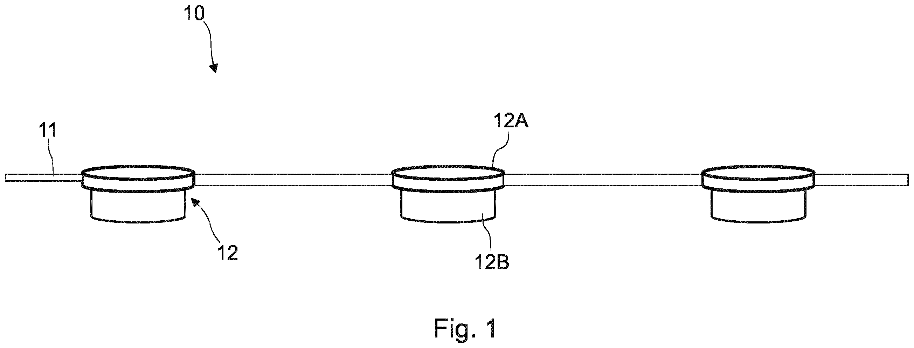

Die US 9 313 944 B1 betrifft die landwirtschaftliche Bewirtschaftung einer Anbaufläche und offenbart ein Steuersystem für ein landwirtschaftliches Gerät, das detektierbare Elemente ("detectable elements "34", die z.B. mit "RFID tags 50" versehen sind) erkennt, welche zwischen der Aussaat bzw. den Samen eines Saatbands verteilt sind (s. Fig. 1A und 1B). Das Steuersystem kann somit eine Unkrautzone und/oder eine Pflanzenzone bestimmen und kann eine Bodenbearbeitungsmaschine zur halb- oder vollautomatischen Bodenbearbeitung, u.a. zwecks Unkrautjäten, ansteuern (s. Text, Sp. 2. Zeilen 10-20). Die detektierbaren Elemente ("34") sind zwischen jeweils zwei Pflanzen bzw. Samen angeordnet und zwar in einem Abstand, der größer als der Pflanzabstand sein kann (s. Fig. 1B). Die spart zwar Aufwand reduziert, aber die Genauigkeit der Detektion; insbesondere können die einzelnen Pflanzorte nicht exakt detektiert werden, was wiederum eine effektive Beipflanzenbekämpfung erschwert. Aufgabe der Erfindung ist es, eine Vorrichtung bereit zu stellen, die eine sichere mechanische Beipflanzenbekämpfung unter Einsatz autonom arbeitender Apparate und Maschinen ermöglicht, wobei die Vorrichtung sich durch Umweltfreundlichkeit und Nachhaltigkeit auszeichnen soll.

Gelöst wird die Aufgabe durch eine Vorrichtung mit den Merkmalen des Anspruchs 1. Demnach wird eine Vorrichtung zum Schutz von Nutzpflanzen und/oder Aussaaten gegen unerwünschte Beipflanzen offenbart, die folgende Merkmale aufweist:
ein wiederverwendbares, band- oder schnurförmiges Gebilde, an dem eine Vielzahl von ringförmigen Elementen beabstandet zueinander angebracht ist, wobei das Gebilde beschaffen ist, auf einer landwirtschaftlichen Fläche aufgebracht zu werden, so dass jedes Element den Ort einer Nutzpflanze oder deren Aussaat umfasst, und wobei jedes Element ein detektierbares Mittel aufweist, um den jeweiligen Ort für eine maschinelle Detektion zur Steuerung einer mechanischen Beipflanzenbekämpfung zu markieren. Vorzugsweise weist das detektierbare Mittel metallisches oder magnetisches Material für eine induktive und/oder magnetische Detektion auf.

Somit stellt die Vorrichtung ein Hilfs- bzw. Markierungsmittel dar, welches einfach auf der landwirtschaftlichen Fläche entlang der jeweiligen Pflanz- oder Aussaatreihe aufgebracht werden kann und eine sichere maschinelle Detektion der jeweiligen Pflanz- bzw. Aussaatbereiche (Schutzzonen) ermöglicht. Daher wird die Vorrichtung nachfolgend auch Schutz- oder Begrenzungsvorrichtung genannt bzw. kurz auch als Markierungshilfe bezeichnet.

Erfindungsgemäß ist unterhalb eines jeden der detektierbaren Mittel mindestens ein Fixierungselement angeordnet, um in einen Erdballen der jeweiligen Pflanze oder Aussaat hinein gesteckt zu werden. Hierdurch kann die Vorrichtung (Markierungshilfe) zusammen mit den Pflanzen (Setzlinge) oder der Aussaat (Samen im Erdballen) auf der landwirtschaftlichen Fläche ausgebracht werden. Somit ist die Vorrichtung (Markierungshilfe) immer optimal für jede Pflanze/Aussaat positioniert und definiert eine ringförmige Schutzzone, innerhalb der keine mechanische Beipflanzenbekämpfung zugelassen wird. Eine aufwendige optische Erfassung und Videoauswertung zur sicheren Unterscheidung von Nutzpflanzen und Beipflanzen ist nicht erforderlich.

Nach der Ernte kann die Vorrichtung (Markierungshilfe) einfach entfernt werden. Dazu ist das band- oder schnurförmige Gebilde vorzugsweise elastisch bzw. flexibel ausgebildet und zum Aufwickeln auf einer Spule sowie zum Abwickeln von derselben beschaffen. Damit kann die Vorrichtung (Markierungshilfe) kompakt gelagert und mehrfach wieder verwendet werden.

Zudem wird auch ein Verfahren zum Schutz von Nutzpflanzen und/oder Aussaaten gegen unerwünschte Beipflanzen vorgeschlagen, wobei die erfindungsgemäße Vorrichtung (Markierungshilfe) zum Einsatz kommt. Das Verfahren enthält zumindest die folgenden Schritte:
- Aufbringen eines wiederverwendbaren, band- oder schnurförmigen Gebildes, an dem eine Vielzahl von ringförmigen Elementen beabstandet zueinander angebracht ist, auf einer landwirtschaftlichen Fläche, wobei jedes Element den Ort einer Pflanze oder deren Aussaat umfasst;
- Detektieren eines jeden Elementes, um den jeweiligen Ort für eine maschinelle Detektion zur Steuerung einer mechanischen Beipflanzenbekämpfung zu markieren; und
- mechanisches Entfernen von Beipflanzen außerhalb der markierten Orte der Pflanzen oder Aussaaten.

Das Verfahren kann vorteilhaft erweitert werden, indem nach einer Ernte der Nutzpflanzen die Vorrichtung (Markierungshilfe) von der landwirtschaftlichen Fläche entfernt wird und dann zur Wiederverwendung für eine spätere neue Anpflanzung oder Aussaat zur Verfügung steht.

Erfindungsgemäß wird vor dem Schritt zum Aufbringen des band- oder schnurförmigen Gebildes, jeweils eine Pflanze oder Aussaat mit einem Erdballen versehen an einem der ringförmigen Elemente appliziert, insbesondere mittels eines Fixierungselementes, das unterhalb des detektierbaren Mittels angeordnet ist und in den Erdballen der jeweiligen Pflanze oder Aussaat hinein gesteckt wird.

Außerdem wird vorzugsweise das band- oder schnurförmige Gebilde zusammen mit den applizierten Pflanzen oder Aussaaten auf die landwirtschaftliche Fläche aufgebracht.

Die Erfindung offenbart auch einen Apparat zum Schutz von Nutzpflanzen und/oder Aussaaten gegen unerwünschte Beipflanzen mittels der Vorrichtung (Markierungshilfe), wobei der Apparat zumindest folgende Komponenten aufweist:
- einen Mechanismus, der beschaffen ist zum Aufbringen eines wiederverwendbaren, band- oder schnurförmigen Gebildes, an dem eine Vielzahl von ringförmigen Elementen beabstandet zueinander angebracht ist, auf eine landwirtschaftliche Fläche, wobei jedes Element den Ort einer Pflanze oder Aussaat umfasst, und/oder der beschaffen ist zum Entfernen des band- oder schnurförmiges Gebilde von der landwirtschaftlichen Fläche nach der Ernte der Nutzpflanzen.

Vorzugsweise weist der Apparat eine Spule zum Aufwickeln der Vorrichtung (Markierungshilfe) auf.

Zudem kann der Apparat noch einen Mechanismus aufweisen, der beschaffen ist, jeweils eine Pflanze oder Aussaat mit einem Erdballen zu versehen und an einem der ringförmigen Elemente zu applizieren, insbesondere mittels eines Fixierungselementes, das unterhalb des detektierbaren Mittels angeordnet ist und in den Erdballen hinein gesteckt wird. Somit wird der Apparat zu einer vollständigen Pflanz- und/oder Aussaat-Maschine erweitert.

Schließlich offenbart die Erfindung noch eine Maschine zum Schutz von Nutzpflanzen und/oder Aussaaten gegen unerwünschte Beipflanzen mittels der Vorrichtung (Markierungshilfe), wobei die Maschine zur mechanischen Beipflanzenbekämpfung ausgebildet ist und folgende Komponenten aufweist:
- eine Einheit zum Detektieren eines jeden Elementes, um den jeweiligen Ort (Nutzpflanzenzone) für eine maschinelle Detektion zur Steuerung der mechanischen Beipflanzenbekämpfung zu markieren;
- einen Mechanismus zum mechanischen Entfernen von Beipflanzen außerhalb der markierten Orte der Pflanzen oder Aussaaten.

Somit ist die Maschine zur sicheren und vollständig autonomen mechanischen Beipflanzenbekämpfung geeignet.

Vorzugsweise ist die Maschine noch mit einer Sensorik zum Erkennen der Beipflanzen und/oder von anpflanzungsfremden Nutzpflanzen, d.h. Nutzpflanzen, die nicht zu der jeweiligen Anpflanzung gehören, ausgestattet.

Die Erfindung umfasst demnach insbesondere die folgenden Aspekte:
(i) Eine Vorrichtung zur Begrenzung von Nutzpflanzenzonen, also eine Vorrichtung die als Markierungshilfe verstanden werden kann.
(ii) Ein Verfahren, das mit Hilfe dieser Vorrichtung eine autonome Beipflanzenbekämpfung durchführt.
(iii) Einen Apparat zur Aufbringung und Wiedereinbringung der Begrenzungsvorrichtungen der Nutzpflanzenzonen auf der landwirtschaftlichen Nutzfläche
(iv) Eine autonom agierende Maschine zur Beipflanzenbekämpfung, wobei die Maschine ausgestattet ist mit: (a) einem Detektor zur Erkennung der Nutzpflanzenzonen auf Basis der durch die Vorrichtung zur Begrenzung von Nutzpflanzenzonen zur Verfügung gestellten Begrenzungsinformationen, optional mit (b) einer Sensorik zur Erkennung von Pflanzen außerhalb der Nutzpflanzenzonen und mit (c) einer mechanischen Vorrichtung zur Bekämpfung von Pflanzen außerhalb der Nutzpflanzenzonen in Bodenhöhe.

Nachfolgend wird die Erfindung anhand von Ausführungsbeispielen im Detail beschrieben, wobei auf die beiliegenden Zeichnungen Bezug genommen wird, die folgende schematische Darstellungen zeigen:
- Fig. 1: zeigt den Aufbau der Vorrichtung (Markierungshilfe) zum Schutz von Nutzpflanzen und/oder Aussaaten gegen unerwünschte Beipflanzen;
- Fig. 2: veranschaulicht das Aufbringen der Vorrichtung (Markierungshilfe) auf einer landwirtschaftlichen Nutzfläche;
- Fig. 3: zeigt den Aufbau einer zur Pflanzung präparierten Pflanze (Setzling) mit Erdkonus, an dem die Vorrichtung (Markierungshilfe) fixiert ist;
- Fig. 4a-d): veranschaulichen dazu das schrittweise Präparieren des Setzlings;
- Fig. 5: zeigt den Aufbau einer zur Pflanzung präparierten Aussaat (Samen) mit Erdkonus, an dem die Vorrichtung (Markierungshilfe) fixiert ist;
- Fig. 6a-d): veranschaulichen dazu das schrittweise Präparieren der Aussaat;
- Fig. 7: zeigt den Aufbau eines Apparates zum Aufbringen der Vorrichtung (Markierungshilfe) auf einer landwirtschaftlichen Nutzfläche und optional zum Wiederabtragen der Vorrichtung;
- Fig. 8: zeigt eine autonom betreibbare Maschine zur mechanischen Beipflanzenbekämpfung mit Hilfe der Vorrichtung (Markierungshilfe);
- Fig. 9: zeigt ein Ablaufdiagramm für ein Verfahren zur mechanischen Beipflanzenbekämpfung mit Hilfe der Vorrichtung (Markierungshilfe); und
- Fig. 10: zeigt eine weitere Ausführungsform der Erfindung.

Zunächst wird auf die Figuren 1-3 Bezug genommen, um eine erste bevorzugte Ausführungsform der Erfindung zu beschreiben:
Wie die Fig. 1 zeigt, ist die Vorrichtung 10 aus einem band- oder schnurförmigen Gebilde 11 und daran befestigten ringförmigen Elementen 12 zusammen gesetzt, wobei die Elemente zueinander beabstandet angeordnet sind und zwar passend zu dem gewünschten Abstand zwischen den zu pflanzenden Setzlingen (vergl. Fig. 2). Jedes ringförmige Element 12 umschließt jeweils eine der Setzlinge (Jungpflanzen) und enthält im oberen ringförmigen Bereich ein detektierbares Mittel 12A, wie z.B. einen metallischen Ring, der mit Hilfe eines induktiven Verfahrens detektiert werden kann.

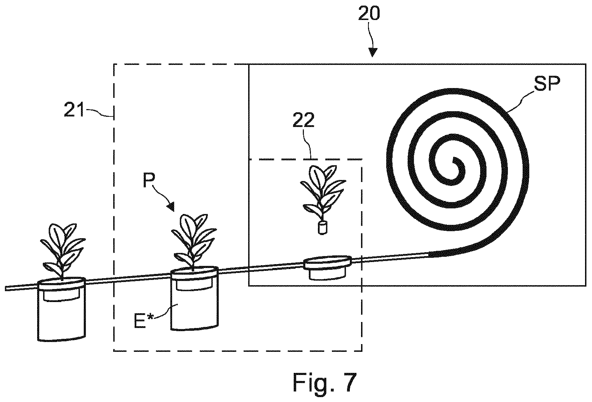

Im unteren Bereich weist jedes Element 12 ein Fixierungselement 12B auf, das hier z.B. als ein rohrförmiger Abschnitt ausgebildet ist, welcher in einem Erdballen (Wurzelballen des Setzling) eingebettet sein kann, so dass sich die Setzlinge mit der Vorrichtung verbinden (s. Fig. 3). Somit befindet sich die jeweilige Pflanze P (Setzling) mit seinen Wurzeln in einem Erdballen B, an dem jeweils ein ringförmiges Element mit detektierbarem Mittel 12A und Fixierungselement 12B angebracht ist. Das band- oder schnurförmige Gebilde 11 ist vorzugsweise elastisch ausgebildet und zum Aufwickeln auf einer Spule und zum Abwickeln von derselben beschaffen. Dies wird später noch anhand der Fig. 7 beschrieben.

Wie es die Fig. 2 veranschaulicht, wird die gesamte Vorrichtung 10 auf einer landwirtschaftlichen Nutzfläche F ausgebracht, indem z.B. das band- oder schnurförmige Gebilde 11 zusammen mit den daran fixierten Setzlingen P1, P2...Pn in eine Setzfurche eingebracht wird und die Furche anschließend geschlossen wird, so dass die Vorrichtung 10 als Markierungshilfe sich oberhalb der Erdkrume befindet.

Durch eine wie in Fig. 2 veranschaulichte Anordnung der erfindungsgemäßen Vorrichtung 10 werden die Orte O1, 02, ... On (Nutzpflanzenzonen) der gesetzten Pflanzen P1, P2, ... Pn eindeutig detektierbar markiert. Die Vorrichtung sorgt also für eine zuverlässige detektierbare Begrenzung der Nutzpflanzenzonen.

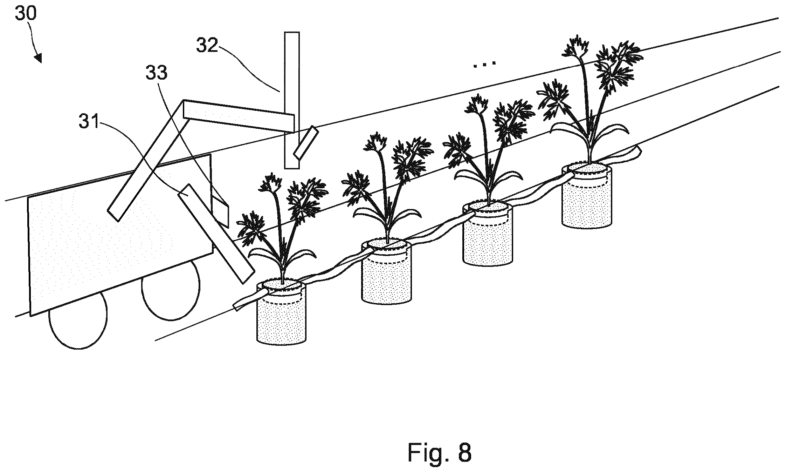

Zum Aufbringen der Vorrichtung 10 wird ein Apparat 20 offenbart (s. auch Fig. 7), der insbesondere einen dafür konzipierten Mechanismus enthält, welcher später noch eingehend beschrieben wird. Weiterhin wird zur Bekämpfung der Beipflanzen eine Maschine 30 offenbart (s. auch Fig. 8), die insbesondere eine Einheit zum Detektieren der Elemente und einen Mechanismus zum mechanischen Entfernen von Beipflanzen enthält, und die ebenfalls später noch eingehend beschrieben wird.

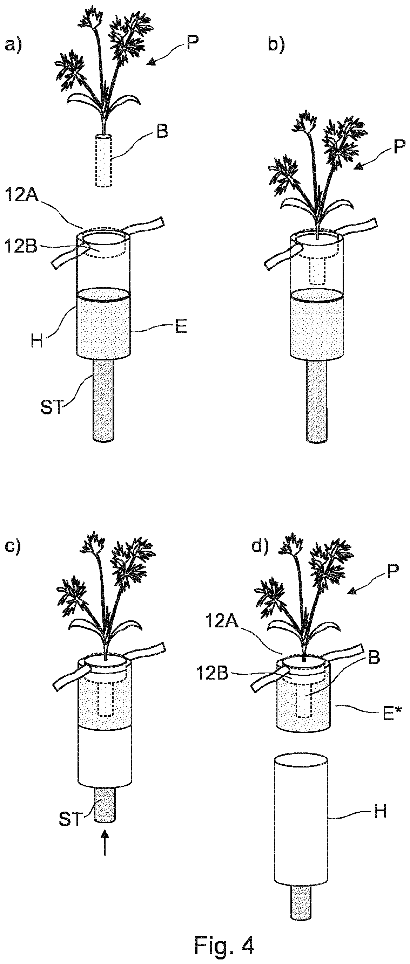

Zunächst wird anhand der Figuren 4 bis 6 das Vorbereiten von Pflanzen (Setzlingen) bzw. Aussaaten (Samen) für das Ausbringen auf der Nutzfläche durch Applizieren derselben an der Vorrichtung 10 und insbesondere durch Fixieren an dem band- oder schnurförmigen Gebilde 11 beschrieben.

Die Fig. 4a-d veranschaulichen den schrittweisen Vorgang zur Vorbereitung bzw. Präparation eines Setzlings P. Wie die Fig. 4a zeigt, wird der Setzling P mit seinem Wurzelwerk bzw. Ballen B in eine Hülse H eingeführt, in welcher sich Erde E bzw. Humus befindet. Am oberen Ende der Hülse H befindet sich eines der ringförmige Elemente 12 mit seinem detektierbaren Mittel 12A und dem Fixierungselement 12B. Der Ballen des Setzlings P wird durch das ringförmige Element hindurch gesteckt (Fig. 4b) und anschließend wird von unten die Erde E mit dem Ballen B verpresst; dazu drückt ein Stempel ST die Erde E nach oben (Fig. 4c), wobei das Fixierelement 12B in die verpresste Erde E eindringt und somit eine Verbindung / Fixierung mit dem Setzlings P hergestellt wird. Schließlich wird der verpresste Erdkonus E* zusammen mit dem Setzling P aus der Hülse H gezogen, so dass die Hülse H für den nachfolgenden Setzling frei ist. Somit kann der Reihe nach jeder Setzling P mit der Vorrichtung 10 (Markierungshilfe) verbunden werden (s. auch Fig. 7 und 8), wodurch dann die Setzlinge P1, P2, ... Pn der Reihe nach und in dem gewünschten Abstand ausgebracht auf der Nutzfläche werden können.

Die beschriebene Präparation der Setzlinge wird von dem Apparat 20 ausgeführt; ebenso auch das anschließende Ausbringen der aufgereihten Setzlinge (s. Fig. 7).

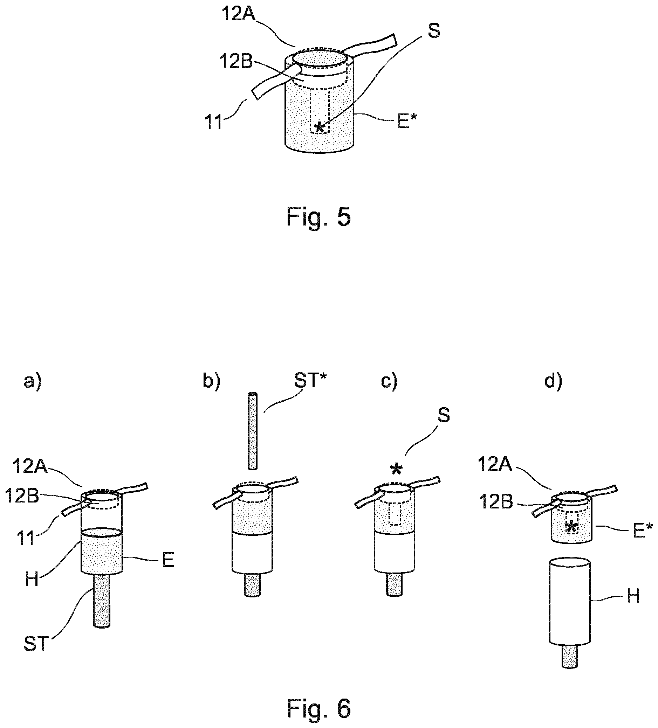

Für die Präparation der Setzlinge (s. Fig. 4a-d) oder auch der Aussaat (s. Fig. 6a-d) weist der Apparat einen Mechanismus 22 aufweist, der beschaffen ist, jeweils eine Pflanze P oder Aussaat S mit einem Erdballen B zu versehen an einem der ringförmigen Elemente 12 zu applizieren, insbesondere mittels des Fixierungselementes 12B, das unterhalb des detektierbaren Mittels 12A angeordnet ist und in den Erdballen B hinein gesteckt wird.

Für das Setzen der Pflanzen bzw. Ausbringen der Aussaat weist der Apparat 20 einen anderen Mechanismus 21 auf, der beschaffen ist, die Vorrichtung 10 zusammen mit den Setzlingen P oder der Aussaat auf der landwirtschaftlichen Fläche F aufzubringen, insbesondere entlang einer Setzfurche (s. Fig. 2 und 7), so dass jedes ringförmige Element 12 den jeweiligen Pflanzort O1, O2, ... On als detektierbare Begrenzung umfasst.

Der Apparat 20 weist dazu insbesondere einen Spulenkörper SP auf, von dem die Vorrichtung 10 mit ihrem band- oder schnurförmigen Gebilde 11 abgewickelt werden kann.

Nach Ausbringung der Pflanzen P können dann Beipflanzen (Unkraut) mit Hilfe der detektierbaren ringförmigen Elemente 12 autonom von einer Maschine 30 (s. Fig. 8) rein mechanisch ohne Einsatz von chemischen Spritzmitteln entfernt werden. Die detektierbaren Elemente 12 können auch hilfreich für eine automatische Ernte der Pflanzen.

Nach der Ernte der Pflanzen P kommt der Apparat 20 wieder zum Einsatz und entfernt die Vorrichtung 10 von der landwirtschaftlichen Fläche F, wobei dann das band- oder schnurförmige Gebilde 11 wieder auf den Spulenkörper SP aufgewickelt wird (vergl. Fig. 7) und somit kompakt bis zur Wiederverwertung als aufgewickelte Markierungshilfe gelagert werden kann.

Dasselbe Verfahren für das Präparieren und Ausbringen der Markierungshilfe kann auch für Aussaaten verwendet werden, wobei anstelle eines Setzlings nun ein Samen S pro Erdkonus E* eingesetzt wird (s. Fig. 5 und 6a-d). Um den jeweiligen Samen S in dem Erdkonus richtig einzubetten, wird ein kleiner Stempel ST* verwendet, der in den Erdkonus ein Loch / eine Vertiefung für den Samen S eindrückt. Auch hier wird dieser Vorgang von dem Apparat 20 (Fig. 7) ausgeführt. Anzumerken ist, dass der Erdkonus E* nicht streng genommen eine konische Form aufweisen muss, sondern jede praktische Form annehmen kann, mit der eine Aussaatmaschine und der darin integrierte Apparat effizient arbeiten kann.

Nach der Pflanzung bzw. Aussaat beginnt die Wachstumsphase. Sobald sich Beipflanzen im Umfeld der Nutzpflanzen ausgebildet haben, kommt die Maschine 30 (s. Fig. 8) zur mechanischen Bekämpfung der Beipflanzen (des Unkrauts) zum Einsatz. Wie bereits erwähnt, ermöglicht die ausgebrachte Vorrichtung bzw. Markierungshilfe 10 mit den detektierbaren Mitteln 12A ein sicheres Detektieren der jeweiligen Nutzpflanzenzonen.

Dazu enthält die Maschine 30 eine Einheit 31 zum Detektieren eines jeden ringförmigen Elementes 12, um den jeweiligen Pflanzort O1, 02, ... On für eine maschinelle Detektion zur Steuerung der mechanischen Beipflanzenbekämpfung zu markieren. Unter Markieren wird hier verstanden, dass die Maschine im Rahmen des autonom ablaufenden Steuerungsprogramms, anhand der Detektion den jeweiligen Pflanzort als Schutzzone der Pflanze erkennt und nur die außerhalb davon liegenden Bereiche für ein mechanisches Entfernen von Beipflanzen freigibt. Die eigentlichen Nutzpflanzenzonen bleiben vor mechanischen Eingriffen geschützt. Die Maschine 30 verfügt über einen von einem Steuerungsprogramm gesteuerten Mechanismus 32 zum mechanischen Entfernen von Beipflanzen außerhalb der jeweiligen Schutzzonen.

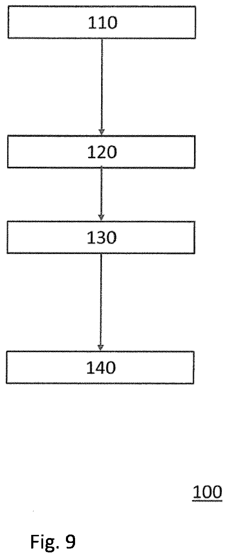

Die Arbeitsweisen des in Fig. 7 schematisch dargestellten Apparates 20 und der in Fig. 8 schematisch dargestellten Maschine 30 werden nachfolgend noch eingehender anhand des in Fig. 9 gezeigten Ablaufdiagramms beschrieben, welches sich auf den Ablauf des erfindungsgemäßen Verfahrens 100 zum Schutz von Nutzpflanzen und/oder Aussaaten gegen unerwünschte Beipflanzen bezieht.

In einem ersten Schritt 110 wird mit Hilfe des Apparates 20 die Markierungshilfe bzw. Schutzvorrichtung 10 mit ihrem band- oder schnurförmigen Gebilde 11, an dem die ringförmigen Elemente 12 beabstandet zueinander angebracht sind, auf der landwirtschaftlichen Fläche F aufgebracht. Somit umfasst jedes Element 12 den Ort O der jeweiligen Pflanze P bzw. der Aussaat S (s. auch Fig. 2).

Im Rahmen dieses Schrittes 110 wird vor dem Aufbringen der Schutzvorrichtung 10 diese präpariert. Dazu versieht der Apparat 20 jeweils eine Pflanze P oder Aussaat mit einem Erdballen B und appliziert daran das ringförmige Element 12. Dies geschieht jeweils mittels des Fixierungselementes 12B, das unterhalb des detektierbaren Mittels 12A angeordnet ist und in den Erdballen B gesteckt wird. Somit wird die Schutzvorrichtung 10 mit den Pflanzen (Setzlingen) P bestückt und alles kann dann in einem schnurrförmigen Gebilde Einheit ausgebracht werden (s. auch Fig. 7).

Die Maschine 30 (s. auch Fig. 8) führt in einem Schritt 120 autonom das Detektieren eines jeden Elementes 12 durch, um den jeweiligen Ort O1, O2, ... On für eine maschinelle Detektion zur Steuerung einer mechanischen Beipflanzenbekämpfung zu markieren.

Somit kann von der Maschine 30 dann in einem Schritt 130 ein sicheres mechanisches Entfernen von Beipflanzen außerhalb der markierten Pflanzorte O1, O2, ... On durchgeführt werden.

Nach der Ernte der Nutzpflanzen P wird von dem Apparat 20 in einem Schritt 140 die jeweilige Schutzvorrichtung 10 wieder von der landwirtschaftlichen Fläche F entfernt und kann zur Wiederverwendung für eine spätere neue Anpflanzung oder Aussaat gelagert werden, insbesondere in Form einer aufgewickelten Spule.

Zusammenfassend werden hier ein Verfahren und Vorrichtungen offenbart, die eine autonome sichere und rein maschinelle Beipflanzenbekämpfung ermöglichen. Die vorliegende Erfindung kommt dem weltweit steigendem Interesse entgegen, in der Landwirtschaft die Menge an eingesetzten Herbiziden deutlich zu verringern. Das hier beschriebene Verfahren zur autonomen mechanischen Beipflanzenbekämpfung ermöglicht es, vollständig auf Herbizide verzichten zu können. Die Erfindung umfasst insbesondere die zuvor beschriebenen Komponenten:
∘ Vorrichtung 10 zur Begrenzung von Nutzpflanzenzonen
∘ Apparat 20 zur Aufbringung und Wiedereinbringung der Begrenzungsvorrichtungen 10 der Nutzpflanzenzonen auf der landwirtschaftlichen Nutzfläche F
∘ Autonom agierende Maschine 30 mit (i) einem Detektor / einer Einheit 31 zur Erkennung der Nutzpflanzenzonen auf Basis der durch die Vorrichtung 10 zur Begrenzung von Nutzpflanzenzonen zur Verfügung gestellten Begrenzungsinformationen, mit (ii) einer Sensorik 33 / einem weiteren Detektor zur Erkennung von Pflanzen außerhalb der Nutzpflanzenzonen in Bodenhöhe und mit (iii) einer mechanischen Vorrichtung / einem Mechanismus 32 zur Bekämpfung von Pflanzen außerhalb der Nutzpflanzenzonen in Bodenhöhe.

Zur Funktion und Wirkungsweise der Komponenten wird hier noch folgendes ergänzt bzw. vertiefend erläutert:

### a) Zur Vorrichtung 10 (auch kurz Schutzvorrichtung oder Begrenzungsvorrichtung genannt):

Wie zuvor insbesondere anhand der Fig. 1-6 beschrieben wurde, weist die Vorrichtung 10 zur Begrenzung von Nutzpflanzenzonen mehrere als detektierbare Umfassung wirkende ringförmige Elemente 12 auf sowie eine bandförmiges Gebilde 11, das als Träger für die detektierbaren Elemente 12A verstanden werden kann, welche als Resonanzobjekte bzw. Induktoren dienen, die wiederum von dem Detektor 31 der autonom agierende Maschine 30 (z.B. mittels elektromagnetischer Induktion) erkannt und identifiziert werden können.

Bei den Setzlingen P sind die Wurzeln des Setzlings bereits ausgeprägt und der Wurzelballen B wird für das maschinelle Setzen in einen Konus E* aus Erde, die beim Pflügen der Setzfurche gewonnen wird, als Träger zur Fixierung der Begrenzungsvorrichtung 10 eingebettet.

Die Fixierung bzw. das dafür eingesetzte Fixierungselement 12B ermöglicht das Einbringen der Begrenzungsvorrichtung 10 auf der landwirtschaftlichen Nutzfläche und bei der Verwendung des Verfahrens bei Saatgut auch zur Fixierung der Nutzpflanzen in den Nutzpflanzenzonen.

Zur späteren (nach der Ernte gewünschten) Rückgewinnung der ausgebrachten Begrenzungsvorrichtungen 10 bzw. seiner Elemente 12 sind diese über das jeweilige bandförmige Gebilde 11 (auch Begrenzungsvorrichtungsträger genannt) miteinander verbunden. Bei einer Verarbeitung von Saatgut wird anstatt des Setzlings das Saatgut S in den Erdkonus E* eingebracht.

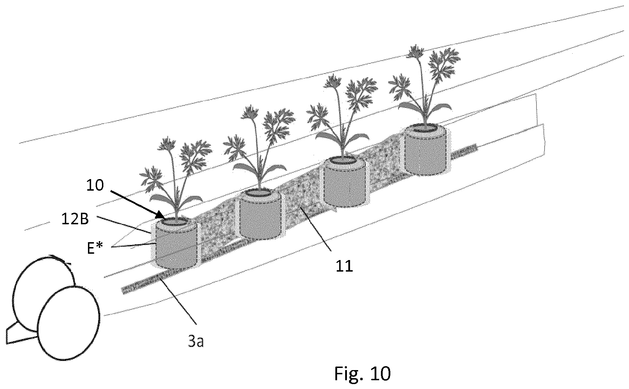

Wenn möglich, sollte der Erdkonus E* aus Erde gebildet werden, die vor Ort beim Pflügen der Setzfurche gewonnen wird. Jedoch kann bei nicht-hinreichender Bodenqualität der Erdkonus E* auch nicht aus der Ackerfurche entnommen sein, sondern kann aus besserwertiger Erde dargestellt bzw. gebildet werden. Ist es notwendig, die Pflanzen über den Zyklus zusätzlich zu bewässern oder zu düngen, oder soll der Erdkonus nach der Ernte wiederverwendet werden, so kann die Fixierung 12B zu einer vorzugsweise wasser- und nährstoffdurchlässigen Hülse verlängert werden (vergl. H in Fig. 4) und das Trägerband 11 kann zusammen mit einem an dem Trägerband und/oder an der Fixierung 12B befestigten Dünge- und/oder Bewässerungssystem BWS in den Boden eingebracht werden, der z.B. ein nährstoffarmer- und/oder wasserarmer Boden bzw. Wüstenboden sein kann. Dies wird anhand der Fig. 10 veranschaulicht. Bei der Wiedereinbringung der Begrenzungsvorrichtung 10 können dann auch die Fixierung 12B, das Trägerband 11, das Dünge- oder Bewässerungssystem BWS sowie der Erdkonus E* wiedergewonnen, aufbereitet und für den nächsten Zyklus wiederverwendet werden.

Zu der in Fig. 10 dargestellte Ausführungsform und der darin verwirklichten Kombination(nen) von technischen Merkmalen, weisen wir darauf hin, dass die folgende Merkmalskombination auch eine an sich selbstständige Erfindung darstellt, welche separat weiterverfolgt werden kann, z.B. im Rahmen einer Teilanmeldung und/oder einer eigenständigen Anmeldung unter Beanspruchung der Priorität(en):
Es handelt sich demnach um eine Vorrichtung 10 zum Schutz von Nutzpflanzen P und/oder Aussaaten S gegen unerwünschte Beipflanzen, die folgende Merkmale umfasst:
ein wiederverwendbares band- oder schnurförmiges Gebilde 11, an dem eine Vielzahl von Erdkonusse E* (ggf. auch ohne Aussaat oder Pflanzen) beabstandet zueinander angebracht ist, wobei das Gebilde 11 beschaffen ist, auf einer landwirtschaftlichen (insbesondere nährstoff- und/oder wasserarmen) Fläche F aufgebracht zu werden, so dass jeder Erdkonus E* für jeweils mindestens eine einer Nutzpflanze P oder deren Aussaat S einen lokalen (optimierten) Nährbodenanpflanzungsort ("Erdsäckchen") ausbildet, wobei das Gebilde 11 nach der Ernte der Pflanzen wieder von der Fläche entfernt werden kann und die (wieder pflanzenlosen) Erdkonusse E* aufbereitet werden können, indem das darin befindliche Erdreich mit Nährstoffen und/oder Wasser aufbereitet wird für eine (spätere) erneute Anpflanzung/Aussaat auf derselben oder einer ähnlichen (nährstoff- und/oder wasserarmen) Fläche. Optional können zumindest einige der Erdkonusse E* und/oder das Gebilde 11 selbst mit detektierbaren Mitteln (siehe z.B. Metallringe 12A in Fig. 3 sowie Fig. 2) ausgestattet werden, um den jeweiligen Ort (O1, O2, ... On) für eine maschinelle Detektion zur Steuerung einer mechanischen Beipflanzenbekämpfung zu markieren. Auch kann optional ein Dünge- und/oder Bewässerungssystem BWS (s. Fig. 10) an dem Gebilde 11 (ggf. integral) angebracht werden, um die Erdkonusse E* ("Erdsäckchen") auch während der Wachstumsphase der Pflanzen mit Wasser und ggf. weitere Nährstoffen zu versorgen.

### b) Zum Einsatz des Apparates 20:

Der Apparat 20 (s. insbes. Fig. 2 und 7) dient im Wesentlichen zur Aufbringung und Wiederverwendung der Schutzvorrichtungen 10 zur Begrenzung zur Nutzpflanzenzonen auf der landwirtschaftlichen Nutzfläche F. Der Apparat kann auch in Sämaschinen und Setzmaschinen integriert werden.

In der gewerbsmäßigen Landwirtschaft sind in der Regel Sämaschinen und Setzmaschinen im Einsatz. Bei Setzmaschinen werden Nutzpflanzen direkt und bei Sämaschinen das Saatgut der Nutzpflanzen auf der landwirtschaftlichen Nutzfläche ausgebracht. Das erfindungsgemäße Verfahren eignet sich sowohl für das Setzen von Nutzpflanzen als auch für die Einzelsaat. Bei Setzmaschinen werden die Setzlinge P direkt in die Begrenzungsvorrichtungen 10 auf dem Begrenzungsvorrichtungsträger 11 und der Fixierung 12B gesteckt. Durch einen Stempel ST mit Hülse H wird dann der Wurzelballen B mit Erde E ummantelt (s. Fig. 4a-d) und von der Setzmaschine als Erdkonus E* in die Setzfurche so gesetzt, dass der Übergang vom Wurzelballen zum Stengel des jeweiligen Setzlings P auf Höhe des umliegenden Bodens ist und anschließend wird die Setzfurche wieder verschlossen.

Durch das beschriebene Verfahren werden die insbesondere als Induktoren ausgebildeten Elemente 12A der Begrenzungsvorrichtungen 10 direkt auf der Bodenoberfläche ausgebracht. Beim Schließen der Setzfurche durch die Setzmaschine mit dem Apparat 20 bleiben damit die Induktoren 12A der Begrenzungsvorrichtungen stabilisiert durch den Begrenzungsvorrichtungsträger 11 auf der Bodenoberfläche fixiert. Die jeweilige Begrenzungsvorrichtung 10 wird dabei mit Hilfe des bandförmigen Trägers 11 wird dabei von der Setzmaschine bzw. dem Apparat 20 von einer Vorratsrolle bzw. Spule SP abgerollt.

Bei Einzelsaatmaschinen muss die Saat S selbst in den Boden eingebracht werden. Dies erfolgt in der Regel auch über eine Saatfurche, in die das Saatgut appliziert wird und die danach von der Einzelsaatmaschine wieder verschlossen wird. Damit die Induktoren 12A der Begrenzungsvorrichtung 10 auf der Bodenoberfläche ausgebracht werden und die Nutzpflanzen P aus der Saat auch innerhalb der Nutzpflanzenzonen keimen, ist es notwendig die Begrenzungsvorrichtungen 10 auf der Bodenoberfläche und die Keimlinge innerhalb der Begrenzungsvorrichtungen 10 zu fixieren.

Dies geschieht über den Erdkonus E*. Die Setzmaschine bzw. der Apparat 20 erzeugt dabei zuerst den Erdkonus E* in der Hülse H und verbindet diesen mit der Begrenzungsvorrichtung 10 indem der Stempel ST die Erde gegen die Fixierung 12B der Begrenzungsvorrichtung 10 drückt. Dann wird mit einem kleinen stabförmigen Stempel ST* ein Saatloch gestochen und die Saat S wird in das Saatloch fallen gelassen. Anschließend wird der Erdkonus E* zusammen mit der Begrenzungsvorrichtung 10 und dem Saatgut in die Saatfurche eingebracht und diese wird anschließend verschlossen (s. Fig. 6a-d).

Beim Schließen der Saatfurche durch die Sämaschine bleiben die Induktoren 12A der Begrenzungsvorrichtungen 10 stabilisiert durch den Begrenzungsvorrichtungsträger 11 auf der Bodenoberfläche fixiert. Durch die Hülsenform der Fixierung 12B und das Saatloch bleiben nach der Keimung die Keimlinge des Saatgutes innerhalb der Nutzpflanzenzonen.

Nach der Ernte können die Begrenzungsvorrichtungen 10 durch das Aufrollen des Begrenzungsvorrichtungsträgers 11 auf eine Spule SP einfach wiedergewonnen und im nächsten Zyklus wiederverwendet werden. Für die Verwendung bei unterschiedlichen Nutzpflanzen werden Durchmesser der Begrenzungsvorrichtungen, Art bzw. Form der Fixierung 12B und die Abstände zwischen den ringförmigen Elementen 12 auf dem Begrenzungsvorrichtungsträger 11 variiert.

Um im Rahmen der Aus- und Wiedereinbringung der Begrenzungsvorrichtungen 10 innerhalb kurzer Zeit größere Mengen verarbeiten zu können, kann die Anordnung von mehreren Begrenzungsvorrichtungsträgern 11 zu einer Optimierung führen (z.B. durch eine parallele Anbringung an einer Querachse).

### c) Zur autonomen Maschine zur Bekämpfung der Beipflanzen:

Eines der größten Probleme bei der Bekämpfung von Beipflanzen ist es, eine sichere und möglichst fehlerfreie Unterscheidung von Nutz- und Beipflanzen zu erreichen. Anstatt die herkömmlichen Maschinen aufwendig für eine Selektion über spezifische Merkmale der Nutzpflanzen zu trainieren, ermöglicht das vorgestellte Verfahren es, ohne spezifische Informationen über die jeweiligen Nutzpflanzen, diese sicher von den Beipflanzen zu selektieren. Dazu erkennt der Detektor 31 der autonomen Maschine 30 (s. auch Fig. 8) die jeweiligen Nutzpflanzenzonen O1, O2, .. On, welche von den Induktoren 12A der Begrenzungsvorrichtung 10 umschlossen und eindeutig detektierbar markiert werden. Die sich außerhalb der Nutzpflanzenzonen befindlichen Beipflanzen werden dann mit einer mechanischen Vorrichtung bekämpft.

Vorzugsweise werden dabei, nachdem die Nutzpflanzenzonen erkannt worden sind, alle Beipflanzen mit Hilfe einer Sensorik 33, die z.B. einen optischen Sensor enthalten kann, innerhalb des Steuerungsprogramms markiert und mit der mechanischen Vorrichtung 32 bekämpft, z.B. über einen Stempel in den Boden gedrückt und/oder mit einem Beitel abgetrennt.

Die hier offenbarte Erfindung ermöglicht eine sichere, automatische mechanische Bekämpfung von Beipflanzen (Unkraut) ohne Einsatz von Herbiziden oder dergleichen, wobei die Schutzvorrichtungen mehrmals wiederverwendbar sind und somit die Erfindung in besonderer Weise durch seine Umweltfreundlichkeit und Nachhaltigkeit auszeichnet.

### Bezugszeichenliste

- 10: Vorrichtung - Hilfsmittel zur Begrenzung
- 11: bandförmiges Gebilde
- 12: ringförmige Elemente
- 12A: detektierbares Mittel
- 12B: Fixierungselement
- P: Pflanzen P1...Pn
- B: Wurzelballen
- E: Erde
- E*: Erdkonus
- S: Aussaat / Samen
- F: landwirtschaftliche Fläche mit Setzfurche(n)
- O: Ort(e ) der Pflanzung(en) O1...On
- H: Hülse
- ST: Stempel
- ST*: Stempel
- 20: Apparat
- 21: Mechanismus zum Aufbringen der Vorrichtung 10
- 22: Mechanismus zum Applizieren der Pflanzen an der Vorrichtung 10
- SP: Spule
- 30: Maschine zur Bekämpfung von Beipflanzen (Unkraut)
- 31: Einheit zum Detektieren
- 32: Mechanismus zum mechanischen Entfernen von Beipflanzen
- 33: Sensorik
- 100: Verfahren mit Schritten:
- 110: Aufbringen der Vorrichtung 10
- 120: Detektieren der Elemente 12
- 130: mechanisches Entfernen von Beipflanzen
- 140: Entfernen der Vorrichtung 10 zur Wiederverwertung

## Patentansprüche

1. Vorrichtung (10) zum Schutz von Nutzpflanzen (P) und/oder Aussaaten (S) gegen unerwünschte Beipflanzen, umfassend:
ein wiederverwendbare, band- oder schnurförmiges Gebilde (11), an dem eine Vielzahl von ringförmigen Elementen (12) beabstandet zueinander angebracht ist, wobei das Gebilde (11) beschaffen ist, auf einer landwirtschaftlichen Fläche (F) aufgebracht zu werden, so dass jedes Element (12) den Ort (O) einer Nutzpflanze (P) oder deren Aussaat (S) markiert, und wobei jedes Element (12) ein detektierbares Mittel (12A) aufweist, um den jeweiligen Ort (01, O2, ... On) für eine maschinelle Detektion zur Steuerung einer mechanischen Beipflanzenbekämpfung zu markieren,
**dadurch gekennzeichnet, dass**
unterhalb eines jeden der detektierbaren Mittel (12A) mindestens ein Fixierungselement (12B) angeordnet ist, um in einen Erdballen (B) der jeweiligen Pflanze (P) oder Aussaat (S) hinein gesteckt zu werden.

2. Vorrichtung (10) nach Anspruch 1, **dadurch gekennzeichnet, dass** das detektierbare Mittel (12A) metallisches oder magnetisches Material für eine induktive und/oder magnetische Detektion aufweist.

3. Vorrichtung (10) nach einem der Ansprüche 1-2, **dadurch gekennzeichnet, dass** das band- oder schnurförmige Gebilde (11) elastisch ausgebildet und zum Aufwickeln auf einer Spule (SP) und zum Abwickeln von derselben beschaffen ist.

4. Vorrichtung (10) nach einem der Ansprüche 1-3, **dadurch gekennzeichnet, dass** die Vorrichtung (10) mit einem Dünge- und/oder Bewässerungssystem (BWS) ausgestattet ist, das zusammen mit dem band- oder schnurförmigen Gebilde (11) in den Boden einbringbar ist.

5. Vorrichtung (10) nach einem der Ansprüche 1-4, **dadurch gekennzeichnet, dass** der Erdballen (B) der Pflanze (P) oder ein die Wurzeln der Pflanze (P) umgebenden Erdkonus (E, E*) in einer wasser- und/oder nährstoffdurchlässigen Hülse (H) ausgebildet ist, die insbesondere zusammen mit Dünge- und/oder Bewässerungssystem (BWS) in den Boden einbringbar ist.

6. Verfahren (100) zum Schutz von Nutzpflanzen (P) und/oder Aussaaten (S) gegen unerwünschte Beipflanzen mittels einer Vorrichtung (10) nach Anspruch 1, **gekennzeichnet durch** folgende Schritte:
- Aufbringen (110) eines wiederverwendbaren, band- oder schnurförmigen Gebildes (11), an dem eine Vielzahl von ringförmigen Elementen (12) beabstandet zueinander angebracht ist, auf einer landwirtschaftlichen Fläche (F), wobei jedes Element (12) den Ort (O) einer Pflanze (P) oder deren Aussaat (S) markiert;
- Detektieren (120) eines jeden Elementes (12), um den jeweiligen Ort (01, O2, ... On) für eine maschinelle Detektion zur Steuerung einer mechanischen Beipflanzenbekämpfung zu markieren;
- mechanisches Entfernen (130) von Beipflanzen außerhalb der markierten Orte (01, 02, ... On) der Pflanzen (P1, P2, ... Pn) oder Aussaaten (S), wobei vor dem Schritt 110 zum Aufbringen des band- oder schnurförmigen Gebildes (11), jeweils eine Pflanze (P) oder Aussaat (S) mit einem Erdballen (B) versehen an einem der ringförmigen Elemente (12) appliziert wird mittels eines Fixierungselementes (12B), das unterhalb des detektierbaren Mittels (12A) angeordnet ist und in den Erdballen (B) hinein gesteckt wird.

7. Verfahren (100) nach Anspruch 6, **dadurch gekennzeichnet, dass** nach einer Ernte der Nutzpflanzen (P) die Vorrichtung (10) von der landwirtschaftlichen Fläche (F) entfernt wird (140) zur Wiederverwendung für eine spätere neue Anpflanzung oder Aussaat.

8. Verfahren (100) nach einem der Ansprüche 6-7, **dadurch gekennzeichnet, dass** im Schritt 110 das band- oder schnurförmige Gebilde (11) zusammen mit den applizierten Pflanzen (P) oder Aussaaten (S) auf die landwirtschaftliche Fläche (F) aufgebracht wird.

9. Apparat (20) zum Schutz von Nutzpflanzen (P) und/oder Aussaaten (S) gegen unerwünschte Beipflanzen mittels einer Vorrichtung (10) nach Anspruch 1, **gekennzeichnet durch**:
- einen Mechanismus (21), der beschaffen ist zum Aufbringen eines wiederverwendbaren, band- oder schnurförmigen Gebildes (11), an dem eine Vielzahl von ringförmigen Elementen (12) beabstandet zueinander angebracht ist, auf eine landwirtschaftliche Fläche (F), wobei jedes Element (12) den Ort (O) einer Pflanze (P) oder Aussaat (S) markiert, und/oder der beschaffen ist zum Entfernen des band- oder schnurförmiges Gebilde (11) von der landwirtschaftlichen Fläche (F) nach der Ernte der Nutzpflanzen (P),
wobei der Apparat einen Mechanismus (22) aufweist der beschaffen ist, jeweils eine Pflanze (P) oder Aussaat (S) mit einem Erdballen (B) zu versehen an einem der ringförmigen Elemente (12) zu applizieren, insbesondere mittels eines Fixierungselementes (12B), das unterhalb des detektierbaren Mittels (12A) angeordnet ist und in den Erdballen (B) hinein gesteckt wird.

10. Apparat (20) nach Anspruch 9, **dadurch gekennzeichnet, dass** der Apparat eine Spule (SP) zum Aufwickeln der Vorrichtung (10) aufweist.

11. Maschine (30) zum Schutz von Nutzpflanzen (P) und/oder Aussaaten (S) gegen unerwünschte Beipflanzen mittels einer Vorrichtung (10) nach Anspruch 1, **dadurch gekennzeichnet, dass** die Maschine zur mechanischen Beipflanzenbekämpfung ausgebildet ist und folgende Komponenten aufweist:
- eine Einheit (31) zum Detektieren eines jeden Elementes (12), um den jeweiligen Ort (01, O2, ... On) für eine maschinelle Detektion zur Steuerung der mechanischen Beipflanzenbekämpfung zu markieren;
- einen Mechanismus (32) zum mechanischen Entfernen von Beipflanzen außerhalb der markierten Orte (01, O2, ... On) der Pflanzen (P1, P2, ... Pn) oder Aussaaten.

12. Maschine (30) nach Anspruch 11, **dadurch gekennzeichnet, dass** die Maschine eine Sensorik (33) zum Erkennen der Beipflanzen (P) und/oder anpflanzungsfremder Nutzpflanzen aufweist.

## Claims

1. A device (10) for protecting crop plants (P) and/or sown seeds (S) against unwanted plants or weed, comprising:
a reusable, ribbon or rope-shaped structure (11) to which a plurality of annular elements (12) are attached spaced apart from one another, wherein the structure (11) is designed to be applied to a cultivated surface (F) so that each element (12) marks the location (O) of a useful plant (P) or its sown seed (S), and wherein each element (12) has a detectable means (12A) to mark the respective location (01, O2, ... On) for detection by machine to manage mechanical weed control, **characterized in that**
below each of the detectable means (12A) at least one fixing element (12B) is arranged to be inserted into a root ball (B) of the respective plant (P) or seed (S).

2. The device (10) according to claim 1, **characterized in that** the detectable means (12A) comprise metallic or magnetic material for inductive and/or magnetic detection.

3. The device (10) according to one of claims 1-2, **characterized in that** said ribbon or rope-shaped structure (11) is elastic and adapted to be wound on and unwound from a spool (SP).

4. The device (10) according to one of claims 1-3, **characterized in that** the device (10) is equipped with a fertilization and/or irrigation system (BWS) which, together with the ribbon or rope-shaped structure (11), is designed to be brought, together with the ribbon or rope-shaped structure (11), into the soil.

5. The device (10) according to one of claims 1-4, **characterized in that** the root ball (B) of the plant (P) or an soil ball (E, E*) surrounding the roots of the plant (P) is placed in a water- and/or nutrient-permeable sleeve (H) which can be introduced into the soil, in particular together with fertilization and/or irrigation systems (BWS).

6. A method (100) for protecting useful plants (P) and/or sown seed (S) against unwanted seedlings by means of a device (10) according to claim 1, **characterized by** the following steps:
- applying (110) to a cultivated surface (F) a reusable ribbon or rope-shaped structure (11) to which a plurality of annular elements (12) are attached spaced apart from one another, each element (12) marking the location (O) of a plant (P) or its sown seed (S);
- detecting (120) each element (12) to mark the respective location (01, 02, ... On) for detection by machine to manage mechanical weed control;
- mechanical removal (130) of unwanted plants or weed outside the marked locations (01, O2, ... On) of the plants (P1, P2, ... Pn) or sown seeds (S), wherein before the step 110 for applying the ribbon or rope-shaped structure (11), a plant (P) or seed (S) being provided with a root ball (B) is attached to one of the annular elements (12), by means of a fixing element (12B) which is arranged below the detectable means (12A) and is inserted into the root ball (B).

7. The method (100) according to claim 6, **characterized in that** after harvesting the crop plants (P), the device (10) is removed (140) from the cultivated surface (F) for reuse for subsequent new plantings or sowing of seeds.

8. The method (100) according to one of claims 6-7, **characterized in that** in step 110 the ribbon or rope-shaped structure (11 ) is applied to the cultivated surface (F) together with the attached plants (P) or seeds (S).

9. An apparatus (20) for protecting useful plants (P) and/or seeds (S) against unwanted plants or weed by means of a device (10) according to claim 1, **characterized by**:
- a mechanism (21) being adapted to apply a reusable ribbon or rope-shaped structure (11), to which a plurality of annular elements (12) are attached spaced apart from one another, onto a cultivated surface (F), each element (12) marking the location (O) of a plant (P) or seed (S) and/or being adapted to remove the ribbon or rope-shaped structure (11) from the cultivated surface (F) after harvesting of the crops (P),
wherein the apparatus comprises a mechanism (22) adapted to apply a plant (P) or seed (S) being provided with a root ball (B) to one of the annular elements (12), in particular by means of a fixing element (12B) which is arranged below the detectable means (12A) and is inserted into the root ball (B).

10. The apparatus (20) according to claim 9, **characterized in that** the apparatus comprises a spool (SP) for winding the device (10).

11. A machine (30) for protecting useful plants (P) and/or seeds (S) against unwanted plants by means of a device (10) according to claim 1, **characterized in that** the machine is designed for mechanical weed control and has the following components:
- a unit (31) for detecting each element (12) to mark the respective location (01 , O2, ... On) for detection by machine to manage mechanical weed control;
- a mechanism (32) for mechanically removing weeds outside the marked locations (O1 , O2, ... On) of the plants (P1 , P2, ... Pn) or sown seeds.

12. The machine (30) according to claim 11, **characterized in that** the machine has a sensor system (33) for detecting unwanted seeds and/or foreign crops planted.

## Revendications

1. Un dispositif (10) de protection de plantes utiles (P) et/ou de semis (S) contre des plantes secondaires indésirables, comprenant:
une structure réutilisable en forme de bande ou de cordon (11) sur laquelle est fixée une pluralité d'éléments annulaires (12) espacés les uns des autres, la structure (11) étant adaptée pour être appliquée sur une surface agricole (F) de telle sorte que chaque élément (12) marque l'emplacement (O) d'une culture (P) ou de son semis (S), et chaque élément (12) comprenant un moyen détectable (12A) pour identifier l'emplacement respectif (O1, O2, ... On) en vue d'une détection mécanique pour la commande d'une lutte mécanique contre les plantes adventices,
**caractérisé en ce que**
au moins un élément de fixation (12B) est disposé en dessous de chacun des moyens détectables (12A) pour être inséré dans une motte de terre (B) de la plante (P) ou du semis (S) respectif.

2. Le dispositif (10) selon la revendication 1, **caractérisé en ce que** le moyen détectable (12A) comprend un matériau métallique ou magnétique pour une détection inductive et/ou magnétique.

3. Le dispositif (10) selon l'une des revendications 1-2, **caractérisé en ce que** la structure (11) en forme de bande ou de cordon est élastique et est adaptée pour être enroulée sur une bobine (SP) et pour être déroulée de celle-ci.

4. Le dispositif (10) selon l'une des revendications 1 à 3, **caractérisé en ce que** le dispositif (10) est équipé d'un système de fertilisation et/ou d'irrigation (BWS) qui peut être mis en place dans le sol en même temps que la structure en forme de bande ou de cordon (11).

5. Le dispositif (10) selon l'une des revendications 1 à 4, **caractérisé en ce que** la motte de terre (B) de la plante (P) ou un cône de terre (E, E*) entourant les racines de la plante (P) est formé dans un manchon (H) perméable à l'eau et/ou aux nutriments, qui peut être introduit dans le sol en particulier avec un système de fertilisation et/ou d'irrigation (BWS).

6. Un procédé (100) de protection de plantes utiles (P) et/ou de semis (S) contre des plantes secondaires indésirables au moyen d'un dispositif (10) selon la revendication 1, **caractérisé par** les étapes suivantes:
- appliquer (110) sur une surface cultivée (F) d'une structure réutilisable (11) en forme de bande ou de cordon, sur laquelle est fixée une pluralité d'éléments annulaires (12) espacés les uns des autres, chaque élément (12) marquant l'emplacement (O) d'une plante (P) ou de ses semis (S);
- détection (120) de chaque élément (12) afin de marquer l'emplacement respectif (O1, O2, ... On) pour une détection mécanique en vue de commander une lutte mécanique contre les plantes secondaires indésirables;
- l'élimination mécanique (130) des plantes secondaires indésirables en dehors des emplacements marqués (O1, O2, ... On) des plantes (P1, P2, ... Pn) ou des semis (S),
dans lequel, avant l'étape 110 d'application de la structure en forme de bande ou de cordon (11), une plante (P) ou un semis (S) muni(e) d'une motte de terre (B) est appliqué(e) sur l'un des éléments annulaires (12) au moyen d'un élément de fixation (12B) qui est disposé en dessous du moyen détectable (12A) et qui est inséré dans la motte de terre (B).

7. Le procédé (100) selon la revendication 6, **caractérisé en ce qu'**après une récolte des plantes utiles (P), le dispositif (10) est retiré (140) de la surface cultivée (F) pour être réutilisé pour une nouvelle plantation ou un nouvel ensemencement ultérieur.

8. Le procédé (100) selon l'une des revendications 6 à 7, **caractérisé en ce qu'**à l'étape 110, la structure (11) en forme de bande ou de cordon est appliquée sur la surface cultivée (F) en même temps que les plantes (P) ou les semis (S) appliqués.

9. Un appareil (20) pour la protection de plantes utiles (P) et/ou de semis (S) contre des plantes secondaires indésirables au moyen d'un dispositif (10) selon la revendication 1, **caractérisé par**:
- un mécanisme (21) adapté pour appliquer sur une surface cultivée (F) une structure réutilisable (11) en forme de bande ou de cordon sur laquelle est fixée une pluralité d'éléments annulaires (12) espacés les uns des autres, chaque élément (12) marquant l'emplacement (O) d'une plante (P) ou d'un semis (S), et/ou adapté pour retirer la structure en forme de bande ou de cordon (11) de la surface cultivée (F) après la récolte des plantes utiles (P),
l'appareil comprenant un mécanisme (22) apte à appliquer une motte de terre (B) sur l'un des éléments annulaires (12) à chaque plante (P) ou semis (S), notamment au moyen d'un élément de fixation (12B) disposé sous le moyen détectable (12A) et inséré dans la motte de terre (B).

10. Le appareil (20) selon la revendication 9, **caractérisé en ce que** l'appareil comprend une bobine (SP) pour enrouler le dispositif (10).

11. Une machine (30) pour la protection de plantes utiles (P) et/ou de semis (S) contre les plantes secondaires indésirables au moyen d'un dispositif (10) selon la revendication 1, **caractérisée en ce que** la machine est conçue pour lutter mécaniquement contre les plantes adventices et comprend les composants suivants:
- une unité (31) de détection de chaque élément (12) afin de marquer l'emplacement respectif (O1, O2, ... On) pour une détection mécanique en vue de commander la lutte mécanique contre les plantes secondaires indésirables;
- un mécanisme (32) pour éliminer mécaniquement les plantes accessoires en dehors des emplacements marqués (O1, O2, ... On) des plantes (P1, P2, ... Pn) ou des semis.

12. La machine (30) selon la revendication 11, **caractérisée en ce que** la machine comporte un système de détection (33) pour reconnaître les plantes accessoires (P) et/ou les plantes utiles étrangères à la plantation.
